# EUROPEAN PATENT APPLICATION

(11) **EP 3 499 435 A1**
(43) Date of publication of application: **19.06.2019**
(21) Application number: 18213500.4
(22) Date of filing: 18.12.2018
(51) Int. Cl.: G06Q 10/02, G06Q 50/30, G06F 16/172

(54) **SYSTEM WITH SEAT MAP CACHE**

(30) Priority: 18.12.2017 US 201762607131 P; 14.12.2018 US 201816220437
(71) Applicant: Sabre GLBL Inc., Southlake, Texas 76092 (US)
(72) Inventor: HOBT, David, Southlake, TX Texas 76092 (US); VINOD, Ben, Grapevine, TX Texas 76092 (US)
(74) Representative: Barker Brettell LLP

(57) **Abstract**

An apparatus includes a cache (111) and a hardware processor 116. The cache (111) stores first (112a) and second (113a) seat maps for a first flight leg (125a) and a second flight leg (125b), respectively. The apparatus determines a flight segment (125) from a first location and a second location included in a request from a user (105). The flight segment (125) includes the first flight leg (125a) and the second flight leg (125b). The first (112a) and second (113a) seat maps are retrieved from the cache (111). The apparatus communicates the flight segment (125) and the first (112a) and second (113a) seat maps to the user (105). The user (105) selects the flight segment (125). The apparatus obtains updated first (112a) and second (113a) seat maps from one or more airline computer reservations systems (CRS) (140) and updates the cache (111). The updated seat maps (112a, 113a) are presented to the user (105). Seat selections (150) from each seat map (112a, 113a) are received from the user (105). The apparatus reserves the seat selections (150) in the respective CRS(s) (140).

## Description

### RELATED APPLICATIONS

This application claims the benefit of Provisional Application Ser. No. 62/607,131, filed on December 18, 2017 and entitled "Seat Map Cache and Seat Led Shopping," the contents of which are incorporated by reference herein in their entirety.

### TECHNICAL FIELD

Certain embodiments of the present disclosure relate, in general, to computerized shopping and booking for travel products and, more particularly, a computerized seat map caching tool.

### BACKGROUND

Global distribution systems (GDS) enable transactions between service providers, such as airlines, and travel agencies by providing up-to-date information regarding inventory of travel products provided by the service providers. For example, the GDS may maintain an updated inventory of available seats on flights provided by a plurality of airlines. The travel agencies may access the inventory by using search criteria to narrow the options for their customer, compare the available flights, and book one or more of the flights. Accordingly, a GDS may facilitate the booking of flights and other travel products by maintaining an accessible inventory and connecting travel agents with service providers.

### SUMMARY

A GDS may support a large volume of requests. For example, there may be hundreds of flight options for a single search request by a traveler. Travelers may also want to see the number of available seats by seat type when reviewing the flight options. To that end, seat map requests may be sent for each leg of each flight option that could be displayed to the traveler. Accordingly, hundreds or thousands of seat maps may be requested and retrieved for each search. Not only does this impose an extreme processing and bandwidth burden on the GDS, many of the retrieved seat maps are not used, e.g., in refining the search results or to select a seat for the traveler.

Furthermore, seat selection may be an important criterion on which the traveler may choose his or her flight. Conventionally, seat selection occurs only after the traveler has selected his preferred flight, e.g., based on price, number of connections, timing, etc. But, if desired seats are not available for the chosen flight or leg of the flight, then the traveler must return to the search results and select a second flight to see if that flight includes a desired seat for his trip. This process may repeat any number of times until the traveler finds a suitable seat on an available flight. Such a process may result in additional search queries that further burden the GDS and associated systems, in addition to wasting the traveler's time and effort.

Conventional systems and methods include several technical problems that prevent or inhibit their efficient use of seat maps for booking flights. In particular, a search for flight options may result in the request for hundreds or thousands of seat maps, many of which will not be used by the traveler looking for a flight. Accordingly, the significant expenditure of processing and bandwidth resources by the GDS to provide those seat maps may be unnecessary and therefore, wasted. Furthermore, seat maps are generally only used when a flight or flight segment is selected by the traveler for further review and booking. As a result, even more processing and bandwidth resources may be wasted in providing flight options with seat maps incompatible with the traveler's preferences. These technical problems may be magnified with an increasing number of travel searches handled by the GDS and an increasing number of flight options due to product differentiation pressures. Accordingly, conventional systems and methods for providing seat maps in the travel booking process pose several technical problems.

Contemplated herein are solutions addressing one or more of the technical problems identified above. For example, certain embodiments provide a seat map caching tool that caches seat maps for a plurality of flights (and their constituent flight legs). Accordingly, a search returning a result including a hundred different flight legs may trigger the access of the corresponding seat maps from the cache instead of from the GDS. The cached seat maps may be updated on a regular basis such that the seat maps reflect an accurate state of each seat map, including the number of seats available by type of seat and other seat map parameters. As a result, the seat map caching tool may be implemented together with the GDS to provide seat maps in response to user requests with a decreased amount of processing and bandwidth expended by the GDS. For example, some of the processing and bandwidth resources used in retrieving and providing the seat maps may be offloaded to the seat map caching tool, which may be distributed across various systems and locations to provide efficient retrieval. Additionally, processing and bandwidth resources expended by retrieving the seat maps from the airline computer reservation systems (CRS) may be reduced due to the seat map caching tool only updating the seat maps in particular instances, such as when the seat map has been modified, after a predetermined period of time, or after the corresponding flight leg is selected for further review.

Additionally, certain embodiments described herein provide an implementation of the seat map caching tool that allows users to search for flights based on seat availability. While conventional systems may allow for the exclusion of certain flights, existing techniques still require the retrieval and review of seat maps to determine whether an acceptable seat is available on a chosen flight. Certain embodiments address this problem by implementing the seat caching tool to identify various seat parameters for each seat map and provide only the seat maps and/or corresponding flights that meet the search criteria based on specified seat parameters. For example, the seat map caching tool may determine the number of available seats, the number of available aisle, window, and/or center seats, the seat prices of each seat, the maximum number of adjacent seats available, etc. These seat parameters may be associated with each respective seat map (and its corresponding flight leg). As a result, the seat map caching tool may allow for the search and/or filtering of flights (and their constituent flight legs) based on seat preferences of the traveler. In this manner, the seat map caching tool allows for a more targeted search based on seat preferences, which further reduces the amount of processing and bandwidth resources expended by reducing the number of seat maps made available and the number of repeated searches or queries by the travel agencies.

According to an embodiment, an apparatus includes a cache and a hardware processor communicatively coupled to the cache. The cache is configured to store a first seat map for a first flight leg and a second seat map for a second flight leg. The hardware processor configured to receive a request from a user. The request includes a first location and a second location. The hardware processor is further configured to determine a flight segment from the first location to the second location. The flight segment includes the first flight leg and the second flight leg. The hardware processor is further configured to retrieve, from the cache, the first seat map and the second seat map. The flight segment, the first seat map, and the second seat map are communicated to the user. The apparatus receives a selection from the user of the flight segment. In response to the selection, the hardware processor is configured to obtain, from one or more airline computer reservations systems (CRS) a first updated seat map for the first seat map and a second updated seat map for the second seat map. The hardware processor is further configured to update, in the cache, the first seat map with the first updated seat map and the second seat map with the second updated seat map. The first updated seat map and the second updated seat map are presented to the user. A first seat selection from the first updated seat map and a second seat selection from the second updated seat map may be received from the user. The hardware processor may be further configured to reserve the first seat selection and the second seat selection in the one or more CRSs.

According to another embodiment, a method includes storing, in a cache, a first seat map for a first flight leg and a second seat map for a second flight leg. The method further includes receiving a request from a user, the request comprising a first location and a second location. The method further includes determining a flight segment from the first location to the second location. The flight segment includes the first flight leg and the second flight leg. The method further includes retrieving, from the cache, the first seat map and the second seat map. The method further includes communicating the flight segment, the first seat map, and the second seat map to the user. The method further includes receiving a selection from the user of the flight segment. The method further includes, in response to the selection, obtaining, from one or more airline computer reservations systems (CRS) a first updated seat map for the first seat map and a second updated seat map for the second seat map. The method further includes updating, in the cache, the first seat map with the first updated seat map and the second seat map with the second updated seat map. The method further includes presenting the first updated seat map and the second updated seat map to the user. The method further includes receiving, from the user, a first seat selection from the first updated seat map and a second seat selection from the second updated seat map. The method further includes reserving the first seat selection and the second seat selection in the one or more CRSs.

According to yet another embodiment, a system includes a cache and a global distribution system. The cache stores a first seat map for a first flight leg and a second seat map for a second flight leg. The global distribution system is communicatively coupled to the cache, a user interface and one or more airline computer reservations systems (CRS). The global distribution system includes a hardware processor communicatively coupled to the cache. The hardware processor configured to receive a request from a user via the user interface, the request comprising a first location and a second location. The first location is an origin location and the second location is a destination location for a flight. A flight segment is determined from the first location to the second location. The flight segment includes the first flight leg and the second flight leg. The hardware processor retrieves, from the cache, the first seat map and the second seat map. The hardware processor communicates the flight segment, the first seat map, and the second seat map to the user via the user interface. The hardware processor receives a selection from the user of the flight segment. In response to the selection, the hardware processor obtains, from the one or more airline computer reservations systems (CRS) a first updated seat map for the first seat map and a second updated seat map for the second seat map. The first seat map is updated in the cache with the first updated seat map and the second seat map is updated in the cache with the second updated seat map. The global distribution system presents the first updated seat map and the second updated seat map to the user via the user interface. A first seat selection from the first updated seat map and a second seat selection from the second updated seat map is received from the user. The hardware processor reserves the first seat selection and the second seat selection in the one or more CRSs.

As described in detail herein, one or more embodiments provided in this disclosure may include one or more technical advantages or solutions to existing technical problems. For example, certain embodiments reduce the amount of processing and bandwidth resources expended in providing seat maps for use by a user. As another example, certain embodiments allow for flight segment searching by seat preferences using cached maps, thereby reducing the number of seat maps provided to the user and reducing the number of repeat or subsequent searches that require additional computer resources. Certain embodiments may have none, some, or all of the above-recited advantages. Other advantages may be readily apparent to one having skill in the art in light of the present disclosure.

### BRIEF DESCRIPTION OF THE DRAWINGS

For a more complete understanding of the disclosed embodiments and their features and advantages, reference is now made to the following description, taking in conjunction with the accompanying drawings, in which:
**FIGURE 1** illustrates an example system including a seat map cache, in accordance with certain embodiments;
**FIGURE 2** illustrates the example system updating the seat map cache in a first manner, in accordance with certain embodiments;
**FIGURE 3** illustrates the example system updating the seat map cache in a second manner, in accordance with certain embodiments;
**FIGURE 4** illustrates the example system retrieving a previously un-cached seat map, in accordance with certain embodiments; and
**FIGURE 5** is a flowchart diagram of an example method for using cached seat maps, in accordance with certain embodiments.

### DETAILED DESCRIPTION

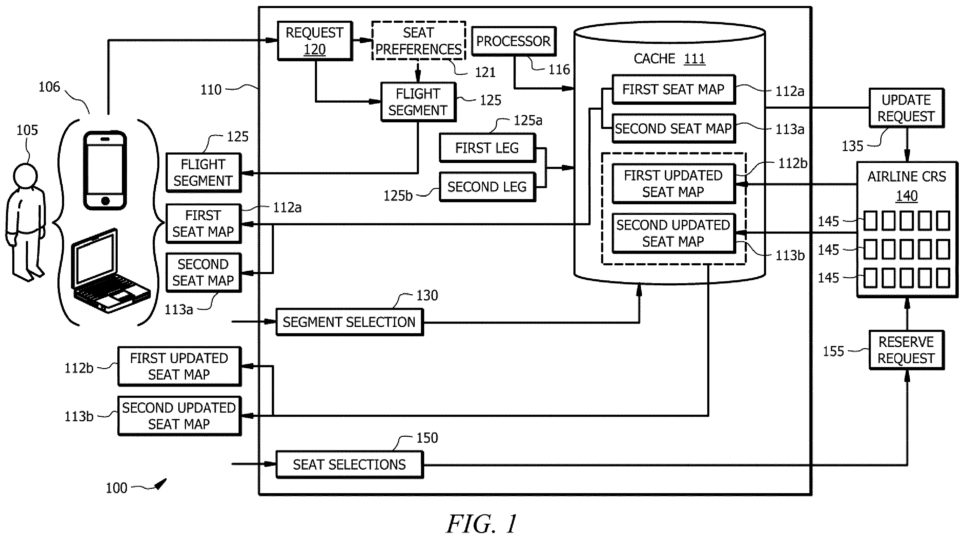

Embodiments of the present disclosure and its advantages are best understood by referring to FIGURES 1 through 5 of the drawings, like numerals being used for like and corresponding parts of the various drawings. Although certain embodiments may be described in reference to particular illustrated examples, the disclosure herein is not limited to the particular illustrated embodiments and/or configurations and includes any and all variants of the illustrated embodiments and any and all systems, methods, or apparatuses consistent with the teachings of this disclosure, as understood by a person having ordinary skill in the art.

As described above, user searches that request numerous seat maps require an inordinate amount of processing and bandwidth resources to handle and may delay the display and ultimate selection of a flight by the user. This disclosure contemplates a system incorporating a cache for storing seat maps that may be communicated for use by a user searching for flights or flight options. The system stores seat maps in the cache and in response to a request from the user, determines a flight segment including one or more flight legs that is compatible with the user's request. The corresponding seat maps may be accessed from the cache and provided to the user with the flight segment. If the user selects the flight segment, e.g., for booking or further review, the system may respond to the selection by updating the seat maps in the cache by accessing the most current seat maps from the airline computer reservation system (CRS) and providing the updated seat maps, from which the user may select one or more seats from each seat map for booking. The system may also receive the seat selections and reserve the seats at the airline CRS. Accordingly, the cache may reduce significant portions of the processing tasks associated with retrieving and providing seat maps in response to user requests.

FIGURE 1 illustrates an example system 100 used for booking flights. System 100 includes user 105, one or more user devices 106, distribution system 110, and one or more airline computer reservation systems (CRS) 140. In certain embodiments, system 100 reduces the processing and bandwidth resources expended by distribution system 110 and provides seat preference-based searching.

User 105 may want to take a trip involving a flight from a first location, e.g., the nearest airport to the location of user 105, to a second location, e.g., the destination city. User 105 may search for flights that match his desired travel itinerary, e.g., based on the origin, destination, and travel dates. For example, user 105 may use user devices 106 to input search criteria and send a search request 120 to find flights for his trip. In some embodiments, user 105 may directly send request 120 to distribution system 110 via one of user devices 106. In some embodiments, user 105 may interface with an intermediary system, such as an online travel search system, to submit request 120. In some embodiments, user 105 may be a travel agent that is querying distribution system 110 via request 120 on behalf of another person looking to book a flight. The process of searching for compatible flights may cause undue strain on distribution system 110, typically wasting processing and bandwidth resources in retrieving and providing seat maps that are never used or fail to meet user 105's preferences.

Distribution system 110 may be any suitable combination of hardware and/or software. As shown in the illustrated embodiment, distribution system includes cache 111 and processor 116 communicatively coupled to cache 111. This disclosure contemplates cache 111 and processor 116 performing any of the functions and/or tasks of distribution system 110 described herein. Generally, distribution system 110 receives search requests from user 105 and provides flight segments compatible with the search requests and corresponding seat map(s). Distribution system 110 may also respond to a selection of a segment by user 105 by updating the seat maps in cache 111 and communicating and/or presenting those updated seat maps for seat selection by user 105. Further, distribution system 110 may facilitate the reservation of seats selected by user 105. In this manner, distribution system 110 may provide an enhanced flight search and booking system by reducing resources expended to provide seat maps to potential travelers.

Processor 116 is any electronic circuitry, including, but not limited to microprocessors, application specific integrated circuits (ASIC), application specific instruction set processor (ASIP), and/or state machines, that communicatively couples to cache 111 and controls the operation of distribution system 110. Processor 116 may be 8-bit, 16-bit, 32-bit, 64-bit or of any other suitable architecture. Processor 116 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. Processor 116 may include other hardware and software that operates to control and process information. Processor 116 executes software stored on memory to perform any of the functions described herein. Processor 116 controls the operation and administration of distribution system 110 by processing information received from cache 111, user 105, user devices 106, and airline CRS 140. Processor 116 may be a programmable logic device, a microcontroller, a microprocessor, any suitable processing device, or any suitable combination of the preceding. Processor 116 is not limited to a single processing device and may encompass multiple processing devices.

Cache 111 may store, either permanently or temporarily, data, operational software, or other information for processor 116. Cache 111 may include any one or a combination of volatile or non-volatile local or remote devices suitable for storing information. For example, cache 111 may include random access memory (RAM), read only memory (ROM), magnetic storage devices, optical storage devices, or any other suitable information storage device or a combination of these devices. The software represents any suitable set of instructions, logic, or code embodied in a computer-readable storage medium. For example, the software may be embodied in cache 111, a disk, a CD, or a flash drive. In particular embodiments, the software may include an application executable by processor 116 to perform one or more of the functions described herein. In certain embodiments, cache 111 may be or implemented as a NoSQL database.

Cache 111 is configured to store seat maps corresponding to flight legs available from one or more airlines. For example, cache 111 may store first seat map 112a and second seat map 113a which correspond to a first flight leg and a second flight leg, respectively. Seat maps 112a and 113a may include any relevant information regarding the seats of the respective flight legs. For example, seat maps 112a and 113a may each store the number of seats for the flight leg, the number of available seats, the number of available seats with different options (e.g., class, aisle/center/window, row, exit row, etc.), the configuration of seats on the carrying airplane, the maximum number of seats available to book together (e.g., on the same row or that are adjacent), etc. In certain embodiments, distribution tool 110 is configured to determine one or more seat map parameters based on seat maps provided by airline CRS 140. For example, the seat maps sent from airline CRS 140 may only include a limited amount of information about the seat availability. The distribution system 100 may deduce other parameters or seat map information based on what is provided by airline CRS 140 and/or retrieve related information from other systems and include the additional information with seat maps 112a and 113a in cache 111.

Each seat map may show all seats on a specific aircraft assigned to a flight, as well as such features as where the bulkheads and exits are located. In some embodiments, the seat map may show other features, such as whether and where power ports are located, etc. The seat map will also generally show the number of total available seats, the number of remaining aisles/windows/center/bulkhead seats, exit-row seats, the number of remaining premium seats, preferential seats, no-charge seats, pay-for seats, and the number of remaining seats positioned together for a specified party size. Additionally, in some embodiments, the seat map may include information indicating the largest party size that can be seated together. Further, details may be available on a specific seat, such as seat 12A (e.g., whether the seat is an aisle seat, a premium seat or has other pertinent characteristics).

Additionally, cache 111 can be configured to display the physical seat map in lieu of asking queries. For example, an application program interface (API) is used to display seat maps. To meet very diverse needs from clients, the API can be a RESTful (Representational State Transfer) API, because RESTful can be used over nearly any protocol, data is not tied to methods and resources. RESTful also has the ability to handle multiple types of calls, return different data formats and even change structurally with the correct implementation of hypermedia. In this scenario, an asynchronous call is submitted to return specific counts by seat type (e.g. aisle, window, exit row, etc.), based on user preferences.

In certain embodiments, seat maps stored in cache 111, such as first and second seat maps 112a and 113a, may be stored in a text or object form. Although the seat maps may be displayed pictorially, seat maps stored in cache 111 may be stored as non-pictorial data. For example, user 105 and/or devices 106 may have access to software and/or hardware to render the seat maps as graphics, e.g., to allow user 105 to interact more easily with the seat map information. This may also reduce the amount of data to be transferred between cache 111, user 105, and airline CRS 140.

Seat maps that are stored in cache 111 may support all Passenger and Airport Data Interchange Standards (PADIS) seat characteristics an airline chooses to send, according to certain embodiments. There are currently over 100 characteristics, which can be grouped into the following categories: seat locations (e.g., as front of cabin, upper deck, adjacent closet, etc.); missing seats (e.g., no seat because of exit door, no seat because of upper stairs, etc.); seat characteristics (e.g., window, aisle, preferred, etc.); seat occupation details (e.g., occupied, advance boarding pass issued, etc.); and seat blocking details (e.g., blocked for airport, blocked for through pax, etc.) Stored seat maps may also support prices for a seat based on Reservations-booking designator (RBD), seat availability, and/or price by frequent-flyer tier or by fare-basis code, in some embodiments.

In certain embodiments, first and second seat maps 112a and 113a represent different gauges of flights, e.g., when a different aircraft is used for the respective legs even if flight segment 120 is only associated with a single flight number. The different aircrafts may have a different seat configuration and seat availability.

Distribution system 110 may receive request 120 from user 105 and/or user devices 106. Request 120 may include one or more search criteria based on which one or more flight options may be provided by distribution system 110. For example, request 120 may include the travel dates, travel origin, and travel destination, and any other relevant information (e.g., other search criteria such as a preferred time of day for departure(s), seat preferences, inflight options, baggage and priority check-in options, etc.). Based on request 120, distribution system 110 may provide one or more flight options to user 105.

Distribution system 110 may determine a flight segment 125 that is compatible with request 120. For example, distribution system 110 may determine that flight segment 125 meets the required search criteria indicated by request 120. Flight segment 125 may be composed of one or more flight legs, such as flight legs 125a and 125b. For example, flight segment 125 may be a flight option from a first airport to a second airport but include two flight legs with a connection at a third airport. In certain embodiments, distribution system 110 builds flight segment 125 using first and second legs 125a and 125b. Because seat maps are particular to each flight leg, associating flight segment 125 with its constituent legs 125a and 125b may allow for easier retrieval of the relevant seat maps.

Based on the identified flight segment 125 and first and second legs 125a and 125b, distribution system 110 may retrieve from cache 111 first seat map 112a and second seat map 113a, corresponding to first leg 125a and second leg 125b, respectively. Once retrieved, distribution system 110 may provide flight segment 125, first seat map 112a, and second seat map 113a to user 105. For example, distribution system 110 may communicate over a network with one of user devices 106 to cause the display of one or more of flight segment 125, first seat map 112a, and second seat map 113a.

Although, in the examples above, flight segment 125 has been described as including first flight leg 125a and second flight leg 125b, flight segment 125 may include any number of flight legs, including a single flight leg and two or more flight legs. Similarly, although FIGURE 1 illustrates the communication of flight segment 125 with first and second seat maps 112a and 113a, in certain embodiments, only a single combined seat map may be communicated for flight segment 125. For example, if flight segment 125 is a flight from Los Angeles to Dallas to New York but is flown on a single plane or without a change of gauge of the plane, first and second seat maps 112a and 113a may be combined to return a single combined seat map for the journey from Los Angeles to New York via Dallas. In some embodiments, each leg of flight segment 125 has stored in cache 111 separate seat maps, e.g., first and second seat maps 112a and 113a, but are combined to form the single combined seat map before being communicated to user 105, e.g., by distribution system 110 and/or within cache 111. For example, user 105 may only select a single seat for each passenger for a flight with one or more stops using the combined seat map. In some embodiments, flights having a connection may store only a single combined seat map in distribution system 110 and cache 111. For example, airline CRS 140 may push only a single combined seat map for a flight with a stop to distribution system 110. In this manner, distribution system 110 may accommodate a variety of different flight segment constructions.

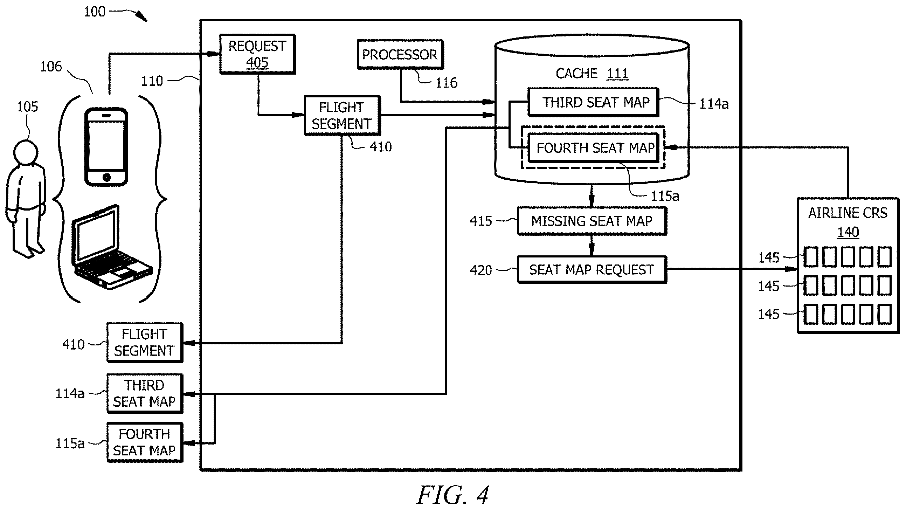

While only a single flight segment is illustrated as being determined and communicated to user 105 by distribution system 110, distribution system 110 may be configured to communicate any number of flight segments that are compatible with request 120 to user 105. For example, the process described above may be repeated for a plurality of flight segments, which may each have one or more flight legs. Different flight segments may include one or more shared flight legs. For example, multiple flight segments may have the same first leg from the origin airport to the connection airport, but each have a different second leg corresponding to a different flight from the connection airport to the destination airport. For each leg, a seat map may be retrieved from cache 111 or otherwise obtained by distribution system 110 for communication to user 105 with the associated flight segment(s) (see FIGURE 4 and corresponding descriptions below for retrieval of seat maps not in cache 111). The relevant flight segments may be provided to user 105, e.g., as a list or other presentation. User 105 may then select one of the flight segments, such as flight segment 125, for further review and booking.

User 105 may select flight segment 125 resulting in a segment selection 130 to be communicated to distribution system 110. Segment selection 130 may indicate that flight segment 125 has been selected for further review and booking by user 105. In response, distribution system 110 may cause an update request 135 to be sent to airline CRS 140 to update first and second seat maps 112a and 113a. In certain embodiments, update request 135 is sent to airline CRS 140 that services legs 125a and 125b of flight segment 125. In this manner, update request 135 is sent to the CRS that can provide an updated seat map for those flight legs. In some embodiments, legs 125a and 125b are serviced by different airline CRSs. Distribution system 110 may then send update request 135 to each of airline CRSs such that updated seat maps may be obtained for every leg of the flight. Update request 135 may include identifying information that identifies which flight segment, flight leg(s), or seat maps the update request is directed towards. In this manner, airline CRS 140 may identify which seat map to send to distribution system 110 in response.

Airline CRS 140 may communicate first updated seat map 112b and second updated seat map 113b to distribution system 110 in response to update request 135. Once obtained, cache 111 may be updated with first and second updated seat maps 112b and 113b. In certain embodiments, first and second updated seat maps 112b and 113b replace first and second seat maps 112a and 113a in cache 111 such that there are no duplicates. This may prevent an outdated seat map from being communicated to the user and from being used to select a seat. For example, if an outdated seat map is used, user 105 may inadvertently select a seat that has already been booked, which may require user 105 to select another seat or select a new flight segment to search for seats, thereby requiring further resources to provide additional flight segment information and seat maps. As a result, when user 105 is seriously considering flight segment 120, updated seat maps may be obtained to present to user 105.

Distribution system 110 may present first and second updated seat maps 112b and 113b to user 105, e.g., via one of user devices 106. User 105 may then select one or more seats based on updated seat maps 112b and 113b for each flight leg. For example, user 105 may view the available seats shown in first updated seat map 112b and select an available seat for the first leg. Similarly, user 105 may view available seats shown in second updated seat map 112b and select an available seat for the second leg. These selections may be indicated by seat selections 150, which may be communicated to and received by distribution system 110.

Based on the received seat selections 150, distribution system 110 may help book the indicated seats for user 105. In certain embodiments, distribution system 110 reserves a first seat selection from first updated seat map 112b and a second seat selection from second updated seat map 113, as indicated in seat selections 150, at the respective airline CRS 140 providing the corresponding flight legs of flight segment 120. Distribution system 110 may interact with one or more airline CRSs 140, and therefore may be configured to reserve seats across multiple airline CRSs 140. In this manner, distribution system 110 may help user 105 select one or more seats for booking and reserve the seats in seat selections 150 using one or more of airline CRSs 140. As shown in FIGURE 1 and described above, system 100 may enable searching, review, and booking of flights. Distribution system 110 may be technically improved through the implementation of cache 111 configured to store seat maps. In particular, cache 111 may reduce the amount of processing resources used by distribution system 110 when providing seat maps in response to request 120 for flight options from user 105. For example, cache 111 may store one or more seat maps 112a and 113a that correspond to the legs of flight segment 125 compatible with request 120. The cached seat maps 112a and 113a may be provided during the search results reporting stage with flight segment 120, thereby avoiding expending additional resources in obtaining seat maps from other systems, such as airline CRS 140. Furthermore, in response to the selection of segment 120, the relevant seat maps may be updated and provided to user 105, thereby providing current seat maps to user 105 for seat selection at the same time as updating cache 111. Distribution system 110 may also aid in reserving seats selected by user 105 via airline CRS 140. Accordingly, an improved and new distribution system 110 including a seat map cache 111 may be provided that has one or more of the described technical advantages.

Request 120 may optionally include seat preferences 121. Seat preferences 121 may include one or more seat preferences, such as a preferred seat class, a preferred row, exit row status, a preference for an aisle, center, or window seat, a number of seats to group together, etc.

In certain embodiments, distribution system 110 may be configured to determine flight segment 125 based on at least in part on seat preferences 121. For example, flight segment 120 may be determined by determining first leg 125a and second leg 125b, each having available seats that are compatible with seat preferences 121. As another example, distribution system 110 may filter compatible flight legs and/or flight segments based on seat preferences 121. As a specific example, if seat preferences 121 indicate that an aisle seat is preferred, flight segment 125 may be constructed using flight legs that have one or more available aisle seats. Seat preferences 121 may include any seat preference or combination of seat preferences. Seat preferences 121 may be binary yes/no preferences or ranking preferences. For example, if a seat preference 121 is binary, then distribution system 110 will determine flight segment 125 only if it includes flight legs that meet seat preference 121. As another example, if seat preference is a ranking preference, then flight segment 125 may be determined even if one or more of the flight legs does not conform exactly with seat preference 121. In this scenario, if multiple flight segments 125 are provided to user 105, then distribution system 110 may be configured to rank each communicated flight segment 125 based on its comparison with seat preferences.

In some instances, user 105 may want to book more than one seat on a flight or flights. For example, user 105 may want to book a family of four together on the aircraft(s) so that they are sitting together. In this scenario, not only is user 105 looking to book four seats but prefers that the seats are booked next to each other (e.g., so that the parents can look over their children and the spouses can spend time together on the plane and reduce the stress of getting on and off of the plane). Distribution system 110 may be configured to accommodate such requests. As discussed above, seat preference 121 may be used to determine flight segment(s) 125 and corresponding first and second seat maps 112a and 113a. In certain embodiments, seat preference 121 includes a group preference that indicates that the search should look for flights that can accommodate the indicated number of passengers to be booked together. The group preference may indicate that all passengers are intended to be grouped together or just a subset of the passengers are desired to be grouped together. For example, the family of four may only need two groups of two persons to be seated together (e.g., a parent with each child or the parents together and the children sat together).

In certain embodiments, distribution system 110 is configured to use seat preference 121 including a group preference to determine flight segment 125. For example, distribution system 110 may filter out candidate flight legs based on whether they can accommodate the indicated number of persons being sat together. Once filtered out, the remaining candidate legs may be used to build flight segment 125 to be made available to user 125 with first and second seat maps 112a and 113a. In certain embodiments, distribution system 110 uses the seat maps in cache 111 to determine what flight legs meet the group preference. For example, first and second seat maps 112a and 113a may include a parameter that indicates the maximum number of seats available to book together. The parameter may be determined based on where seats are available for booking. For example, if there are four available seats that share a row concurrently, then the parameter may be at least four. The parameter may differ based on what seats are considered "together." For example, it may be based on the maximum number of concurrent seats in a single row or it may also include multi-row adjacent seats (e.g., adjacent rows on the same side of the airplane). In any of the various ways of implementing the parameter, distribution system 110 may review the parameter from the respective seat map for each eligible flight leg to determine which flight legs (and seat maps) meet the group preference parameter (e.g., is parameter greater than or equal to group preference number). Once distribution system 110 determines the compatible flight legs, it may build flight segment 125 that meets seat criteria 121 including the group preference.

In some embodiments, no compatible flight segment 125 is found for the group preference. In such instances, distribution system 110 may determine a closest matching flight segment or flight segments. For example, distribution system 110 may determine flight segments that can accommodate the most number of passengers booked together even if below the group preference number indicated (e.g., if group preference number of four, it may show flight segments with three seats bookable together). In some embodiments, the flight segments determined by distribution system 110 in these instances may be flight segments that can accommodate the number of seats together in chunks. For example, if the group preference number is four, then flight segments accommodating two sets of two seats that are bookable together may be returned. The group preference number may be broken up in any suitable way (e.g., any whole number separation, any separation where the least chunk includes two seats, dividing the chunks evenly or by a common denominator, etc.).

In some embodiments, distribution system 110 does not completely filter out flight legs based on the group preference. For example, distributions system 110 may prioritize flight segments 125 that meet the group preference and still provide other seat segments to the user (e.g., by ranking the group preference matching flight segment 125 first or providing a visual or other indication that flight segment 125 has met the group preference). Accordingly, the group preference feature may be incorporated into distribution system 110 to provide enhanced searching and booking options to user 105.

Once flight segment 125 is provided with first and second seat maps 112a and 113a that meet the group preference, as described above, user 105 may select flight segment 125 and make the seat selections based on first and second updated seat maps 112b and 113b. User 105 may then be able to select the grouped seats for reservation, which distribution system 110 may aid by reserving the seats with airline CRS 140. In this manner, distribution system 110 may provide an improved booking and reservation system allowing a traveler to search and book seats together using cached seat maps.

As a result, distribution system 110 may be further enhanced by enabling flight option searching using seat preferences. Certain embodiments may reduce the amount of processing and bandwidth expended by distribution system 110 in retrieving seat maps by limiting how many flight segments 125 are determined and communicated to user 105. Additionally, the incorporation of seat preferences 121 reduce the chances that user 105 will not select one of the presented flight segments 125 because they comply with his preferences, thereby reducing resources spent to conduct additional searches and seat map retrievals.

In certain embodiments, distribution system 110 may be implemented on one or more servers. The term "server" and/or "servers" or any other reference to a "server" may refer to any suitable combination of hardware and/or software, such as memory and control logic, for storing, accessing, retrieving, and communicating various types of information, for example, user profile and travel product information. Although the disclosure herein refers to distribution system 110 and airline CRS 140, system 100 may utilize any suitable server or database implemented thereon that may store information used for providing cached seat maps to user 105, as described above. One or more of distribution system 110 and airline CRS 140 may include any suitable combination of volatile or non-volatile, local or remote devices suitable for storing and maintaining information. For example, the one or more of distribution system 110 and airline CRS 140 may include random access memory (RAM), read only memory (ROM), solid state storage devices, magnetic storage devices, optical storage devices, or any other suitable information storage device or a combination of such devices.

Servers contemplated for use in system 100, including distribution system 110 and airline CRS 140, may be implemented in any suitable manner. As an example, each of distribution system 110 and airline CRS 140 may be implemented as a single server, as multiple servers, as a server distributed over multiple locations, as one or more virtualized servers (e.g., implemented on the cloud), or provided as a service. Additionally, servers described herein may be implemented using hardware, software, or any suitable combination thereof. For example, cache 111 may be implemented as a NoSQL database and be communicatively coupled to processor 116 of distribution system 110. Furthermore, servers or systems described herein may share one or more hardware or software elements with other servers or servers, including servers or systems not owned or controlled by the same entity implementing portions of system 100. Accordingly, the terms "server" and "servers" as referenced herein, e.g., as used in reference to distribution system 110 and airline CRS 140, may refer to any suitable apparatus or implementation of software that may provide access to the information used by travel booking system 100.

Although a particular instance of updating seat maps is described above in reference to FIGURE 1, distribution system 110 may be configured to update seat maps in cache 111 in other ways. Updating cache 111 regularly may reduce the chance that an outdated seat map is sent in response to request 120. Outdated seat maps may cause unnecessary additional searching and processing by distribution system 110 when user 105 selects a seat map to select a seat for booking, but the selected seat is no longer available or when an entirely new flight segment must be determined if no available seats remain for one of the flight legs selected based on the outdated seat map.

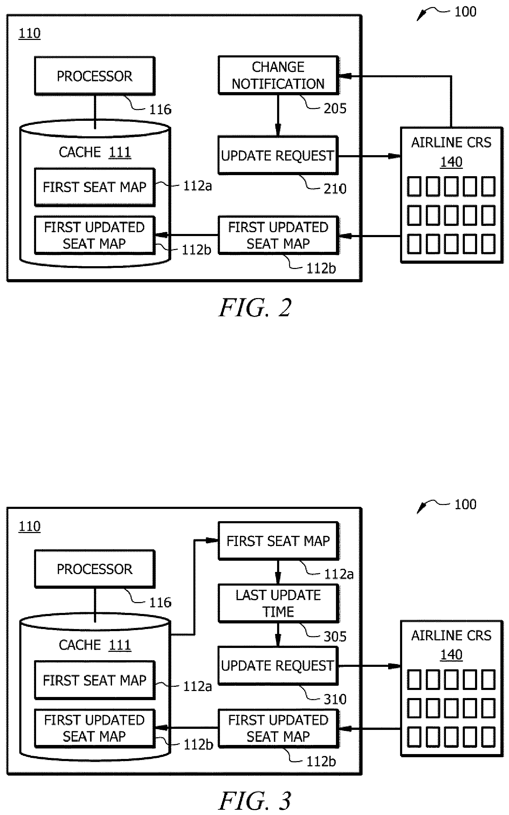

FIGURE 2 illustrates a first manner in which system 100 may update cache 111 of distribution system 110. As alluded to above, seat maps may change over time as additional seats on a flight are made available and seats are booked on the flight. These changes may be recorded in the seat maps stored by the servicing airline, such as in airline CRS 140. In certain embodiments, when there has been a change to one or more seat maps, distribution system 110 may receive a change notification 205 from airline CRS 140. In response, distribution system 110 may send an update request 210 for the impacted seat map. For example, if change notification 205 indicates that first seat map 112a has changed, then update request 210 may specify a request for first updated seat map 112b from airline CRS 140. Based on update request 210, airline CRS 140 may provide access to first updated seat map 112b. Distribution system 110 may store first updated seat map 112b in cache 111 and replace first seat map 112a with first updated seat map 112b. In this manner, cache 111 may be kept up to date by updating the stored seat maps as they change.

Variations of the process depicted in FIGURE 2 are also contemplated herein. For example, in certain embodiments, change notification 205 already includes first updated seat map 112b, thereby obviating the need to determine update request 210 to send to airline CRS 140. This may reduce the amount of processing resources required to receive the updated seat map. On the other hand, distribution system 110 may want to batch update requests 210 such that updated seat maps are only retrieved X number of times per day or according to a predetermined schedule.

FIGURE 3 illustrates a second manner in which system 100 may update cache 111 of distribution system 110. In certain embodiments, cache 111 updates first seat map 112a if it has not been updated after a predetermined period of time. For example, if first seat map 112a has not been updated in cache 111 in seven days, cache 111 may request an update to first seat map 112. In certain embodiments, distribution system 110 may obtain first seat map 112a from cache 111 and determine the last update time 305 of first seat map 112a. If last update time 305 exceeds a predetermined period of time (e.g., a time threshold), then an update request 310 may be sent to airline CRS 140 responsible for first seat map 112a to request an updated version. Airline CRS 140 may provide access to first updated seat map 112b to distribution system 110. Cache 111 may be updated with first updated seat map 112b, replacing cached first seat map 112a. In this manner, cache 111 may be kept up-to-date.

In certain embodiments, first updated seat map 112b is provided despite no changes being made to first seat map 112a. In certain embodiments, first updated seat map 112b is not provided by airline CRS 140 if there are no changes to first seat map 112a.

In certain embodiments, distribution system 110 does not retrieve first seat map 112a from cache 111 to determine last update time 305, but instead uses a copy of first seat map 112 stored at distribution system 110. In this manner, the seat maps may be updated periodically on a distribution system 110 level instead of updating each cache 111 on its own schedule. This may be preferred when there are a large number of caches 111 served by distribution system 110 and/or when those caches 111 are updated separately (e.g., on each cache's 111 initiative or in response to queries on specific caches 111).

When distribution system 110 updates one or more seat maps may be based on a variety of factors. For example, a refresh frequency may be used to determine when to update the seat maps. The refresh frequency may be based on the number days before departure where there is typically a spike in booking activity. For example, on Day 13 (meaning 14 days from today), certain fares close down, as they also do at 21 days, 7 days, 3 days and so forth. Thus, every night in cache 111, besides rolling in a new horizon day and removing past-date flights, existing flights are refreshed for the reading days. The reading days triggering a refresh may be configurable and can be 0, 1, 2, 3, 4, 5, 6, 13, 20, 27, and 42, and any other desired value greater than 42.

Distribution system 110 may forgo update request 310, in certain embodiments. For example, if seat maps stored at distribution system 110 (and not necessarily at each cache 111) are automatically updated by airline CRS 140, then no update request 310 may be necessary, because distribution system 110 may already have the most up-to-date version of first seat map 112. Distribution system 110 may use this version of first seat map 112 as first updated seat map 112b with which cache 111 may be updated.

In certain embodiments, distribution system 110 implements one or more of a pull, push, or combination push-pull cache updating process. In a pull updating process, an updated seat map may be provided to distribution system 110 from airline CRS 140, such as in FIGURE 2, but the updated seat map may not be updated in cache 111 immediately. For example, cache 111 may only be updated periodically using the latest seat maps in distribution system 110. This may reduce the amount of communications overhead between distribution system 110 and cache 111 by limiting the number of times cache 111 updates but may reduce fidelity in the cached seat maps if the seat maps are changing rapidly. This may be beneficial in a slower change environment and when distribution system 110 includes or is coupled to many caches 111. For example, distribution system 110 may include dozens or hundreds of caches 111 at various locations serving different users or sets of users. If updates are sent to every cache 111 every time an updated seat map is received at distribution system 110, the communications by distribution system 110 may be updating caches 111 disproportionally, which may prevent other communications from being received by distribution system 110 and/or may cause distribution system 110 to unnecessarily or inefficiently use communication bandwidth and processing resources.

Distribution system 110 may instead implement a push process that updates cache 111 whenever an updated seat map is received in distribution system 110. As mentioned above, this may have certain costs, but those costs may be outweighed when high fidelity is required. Additionally, if large and rapid changes are occurring to cached seat maps, a push process may ensure that up-to-date seat maps are cached in caches 111. If not, the advantages of cache 111 may be overridden by the increased resources used to communicate with distribution system 110 for updated seat maps and to handle an increase of searches initiated when a user's selected seat from the outdated seat map is no longer available.

In certain embodiments, distribution system 110 may implement a combined pull-push caching process. The combined pull-push process may adaptively change between push and pull depending on the rate of change of the data to be cached. For example, a time to refresh (TTR) parameter may be used to measure how rapidly the data is changing. If the TTR is low (e.g., rapid changes to seat maps), distribution system 110 may implement a push updating process so that caches 111 have updated seat maps when there is high turnover. In contrast, if the TTR is high (less change), distribution system 110 may implement a pull updating process so that caches 111 are updated less frequently. In this manner, the combined pull-push caching process may optimize the increased efficiencies of the pull process with the increased fidelity of the push process. Although a TTR parameter is mentioned as controlling the change between push and pull processes, any other suitable parameter or combination of parameters may be used. The controlling parameter(s) may be controlled by distribution system 110 and may be based on the current load on distribution system in addition to the rate of change of the seat maps.

As shown in FIGURES 2 and 3 and described above in reference to certain embodiments, distribution system 110 may implement a number of updating processes to ensure that cache 111 is kept current. For example, distribution system 110 may be updated with new seat maps when a seat map is altered in airline CRS 140. As another example, seat maps stored in cache 111 may be updated periodically based on the last time they were updated. Additionally, distribution system 110 may implement one or more different caching processes to update cache 111. For example, distribution system 110 may push every updated seat map to cache 111 or may only provide an updated seat map to cache if a pull request is proved by cache 111. Distribution system 110 may also implement any combination of the various updating procedures to optimize the operation of distribution system 110 and provide up-to-date seat maps in cache 111.

FIGURE 4 illustrates a configuration of system 100 that can retrieve and cache a seat map to accommodate a determined flight segment. FIGURE 4 is similar to FIGURE 1 except that the determined flight segment 410 includes one or more flight legs for which a corresponding seat map is not stored in cache 111. In particular, user 105 may submit request 405 that identifies a third location and a fourth location corresponding to origin and destination locations, respectively. Based on the locations, distribution system 110 may determine flight segment 410 that has two legs with corresponding third and fourth seat maps 114a and 115a. The interfacing system may access cache 111 and determine that there is a missing seat map, fourth seat map 115a. In response, cache 111, may indicate a missing seat map 415 to distribution system 110. Distribution system 110 may then provide the missing seat map.

In certain embodiments, distribution system 110 provides the missing fourth seat map 115a from distribution system 110. For example, distribution system 110 may have stored a copy of fourth seat map 115a (e.g., when pushed from airline CRS 140 when added as a new seat map), but cache 111 may not have been updated since. Accordingly, distribution system 110 may communicate fourth seat map 115a to cache 111, wherein fourth seat map 115a is added to cache 111.

In certain embodiments, distribution system 110 does not already have stored a copy of fourth seat map 115a. In response, a seat map request 420 may be created to request the missing seat map and sent to the responsible airline CRS 140. In response, fourth seat map 115 may be provided to cache 111. In some embodiments, airline CRS 140 interfaces directly with cache 111 and communicates fourth seat map 115a directly to cache 111. In other embodiments, airline CRS 140 communicates fourth seat map 115a to distribution system 110, from which cache 111 may be updated. In some embodiments, all caches 111 may be updated when distribution system 110 receives missing fourth seat map 115a from airline CRS 140.

As a result, cache 111 may have available both third and fourth seat maps 114a and 115a corresponding to the flight legs of flight segment 410. Then, cache 111 may provide flight segment 410 with third and fourth seat maps 114a and 115a to user 105. User 105 may select flight segment 410 and cause the updating of third and fourth seat maps 114a and 115a in a similar manner described above with flight segment 120 and first and second seat maps 112a and 113a. The seat selection and booking process may continue with respect to flight segment 410 in a similar manner to flight segment 120 as depicted in FIGURE 1. In this manner, cached seat maps may be provided for booking a flight segment, even if one or more of the seat maps was not previously stored at cache 111.

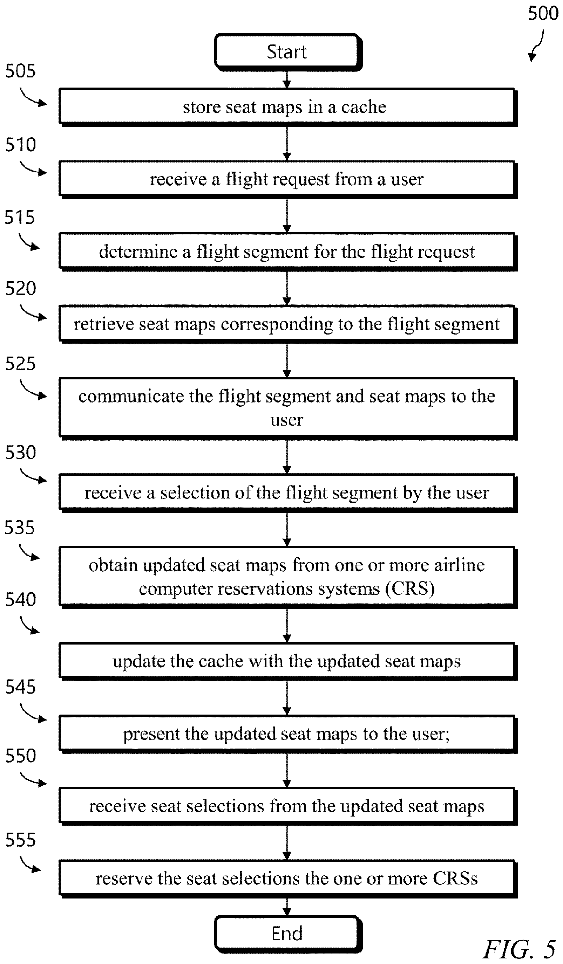

FIGURE 5 is a flowchart diagram illustrating an example method 500 for using cached seat maps, in accordance with certain embodiments. Method 500 may begin at step 505, wherein seat maps are stored in a cache. For example, a plurality of seat maps corresponding to a plurality of flight legs may be stored in a cache. The seat maps may be obtained from one or more airline CRSs, such as airline CRS 140. In one example, cache 111 of distribution system 110 stores first and second seat maps 112a and 113a.

With the seat maps stored in cache, at step 510, a flight request may be received from a user. For example, user 105 may send a flight request 120 to distribution system 110. The flight request may include any search criteria from which one or more eligible flight segments may be identified. For example, the flight request may indicate an origin, a destination, and one or more travel dates. The flight request may also optionally include seat preferences, which indicate the user's preference with respect to different seat options, such as whether the seat is an aisle, center, or window seat or whether the seat is located in coach or in first class.

At step 515, a flight segment may be determined for the flight request. For example, based on the available flights that are compatible with the flight request, a flight segment may be built from respective flight legs to get the user from the designated origin to his destination. As an example, flight segment 125 may be determined by distribution system 110 by combining first leg 125a and second leg 125b. In certain embodiments, seat preferences are used to determine the flight segment. For example, distribution system 110 may determine flight segment 125 based on whether first and second legs 125a and 125b meet seat preferences 121. In this manner, seat preferences may be incorporated to get a more targeted result and prevent unnecessary backtracking and searches.

Based on the determined flight segment, corresponding seat maps may be retrieved in step 520. For example, seat maps corresponding to the flight legs of the flight segment may be retrieved from a cache, which may be more readily accessible to the user's system. As a particular example, distribution system 110 may retrieve first seat map 112a and second seat map 113a from cache 111, wherein first seat map 112a corresponds to first leg 125a and second seat map 113a corresponds to second leg 125b. In this manner, the seat maps relevant to the flight segment may be retrieved for the requesting user.

At step 525, the flight segment and seat maps are communicated to the user. For example, flight segment 125 and first and second seat maps 112a and 113a may be communicated to one of devices 106 used by the user. The flight segment may be reviewable by the user. The user may select the flight segment if it matches his criteria and if he prefers it over other flight segments that are available. For example, in certain embodiments, the steps of determining a flight segment and providing the flight segment and seat maps may be repeated. In some embodiments, the steps are repeated until there are no other compatible flight segments or in other embodiments, repeated a predetermined number of times or a number of times indicated by the user request. The user may be presented with all of the flight segments and choose one of them to further review and book.

At step 530, a selection of the flight segment by the user is received. For example, segment selection 130 may be received by distribution systems 110. Based on the selection, at step 535, updated seat maps may be obtained from one or more airline computer reservations systems (CRS). For example, distribution system 110 may access airline CRS 140 to update cache 111 with first and second updated seat maps 112b and 113b. In some embodiments, airline CRSs are not accessed to update the seat maps but are provided from another system. Once obtained, at step 540, the cache may be updated with the updated seat maps. For example, first and second updated seat maps 112b and 113b may be communicated to cache 111, which may store first and second updated seat maps 112b and 113b in memory and subsequently delete or override first and second seat maps 112a and 113a to avoid duplicate seat maps.

At step 545, the updated seat maps are presented to the user. For example, because the user has selected the flight segment for further review and booking, the updated seat maps are provided to ensure the most up-to-date seat maps are provided when user is selecting seats. The user may review the available seats indicated by the updated seat maps and select a preferred seat to book. The selection may be received in step 550, in which one or more seat selections are received for the flight segment (e.g., seat selections 150 at distribution system 110).

At step 555, the seat selections may be reserved at the one or more CRSs. For example, distribution system 110 may determine which seats have been selected based on seat selections 150 and determine which airline CRS(s) 140 to communicate with to reserve the selected seats. Once determined, distribution system 110 may initiate a reservation request 155 and send it to airline CRS 140. As a result, method 500 has provided an improved method of using cached seat maps to book seats for a flight.

Modifications, additions, or omissions may be made to method 500 depicted in FIGURE 5. Method 500 may include more, fewer, or other steps. For example, steps may be performed in parallel or in any suitable order. While discussed as system 100 (or components thereof) performing the steps, any suitable component of system 100, such as distribution system 110 or cache 111 for example, may perform one or more steps of the methods. Additionally, method 500 may include any suitable step to carry out any of the described functions of system 100 and/or distribution system 110. Further, any of steps of method 500 may computerized and/or carried out using hardware, such as processor 116 of distribution system 110, or any other suitable system implementing one or more components of system 100, such as any hardware or software implementing cache 111.

In addition, techniques, systems, subsystems, and methods described and illustrated in the various embodiments as discrete or separate may be combined or integrated with other systems, modules, techniques, or methods without departing from the scope of the present disclosure. Other items shown or described as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

## Claims

1. An apparatus, comprising:
a cache configured to store a first seat map for a first flight leg and a second seat map for a second flight leg;
a hardware processor communicatively coupled to the cache, the hardware processor configured to:
receive a request from a user, the request comprising a first location and a second location;
determine a flight segment from the first location to the second location, the flight segment comprising the first flight leg and the second flight leg;
retrieve, from the cache, the first seat map and the second seat map;
communicate the flight segment, the first seat map, and the second seat map to the user;
receive a selection from the user of the flight segment;
in response to the selection, obtain, from one or more airline computer reservations systems (CRS) a first updated seat map for the first seat map and a second updated seat map for the second seat map;
update, in the cache, the first seat map with the first updated seat map and the second seat map with the second updated seat map;
present the first updated seat map and the second updated seat map to the user;
receive, from the user, a first seat selection from the first updated seat map and a second seat selection from the second updated seat map; and
reserve the first seat selection and the second seat selection in the one or more CRSs.

2. A system, comprising:
a cache configured to store a first seat map for a first flight leg and a second seat map for a second flight leg; and
a global distribution system communicatively coupled to the cache, a user interface and one or more airline computer reservations systems (CRS), comprising: a hardware processor communicatively coupled to the cache, the hardware processor configured to:
receive a request from a user via the user interface, the request comprising a first location and a second location, wherein the first location is an origin location and the second location is a destination location for a flight;
determine a flight segment from the first location to the second location, the flight segment comprising the first flight leg and the second flight leg;
retrieve, from the cache, the first seat map and the second seat map; communicate the flight segment, the first seat map, and the second seat map to the user via the user interface;
receive a selection from the user of the flight segment;
in response to the selection, obtain, from the one or more airline computer reservations systems (CRS) a first updated seat map for the first seat map and a second updated seat map for the second seat map;
update, in the cache, the first seat map with the first updated seat map and the second seat map with the second updated seat map;
present the first updated seat map and the second updated seat map to the user via the user interface;
receive, from the user, a first seat selection from the first updated seat map and a second seat selection from the second updated seat map; and
reserve the first seat selection and the second seat selection in the one or more CRSs.

3. The apparatus of claim 1 or the system of claim 2, wherein the hardware processor is further configured to:
receive a notification from the CRS that the first seat map has changed; and
in response to the notification, replace, in the cache, the first seat map with the changed first seat map from the CRS.

4. The apparatus of claim 1 or of claim 3, or the system of claim 2 or of claim 3, wherein the hardware processor is further configured to:
determine that a time since the first seat map was last updated exceeds a predetermined period of time; and
in response to the determination, update, in the cache, the first seat map with a current first seat map from one of the CRSs.

5. The apparatus of claim 1 or of claim 3 or of claim 4, or the system of claim 2 or of claim 3 or of claim 4, wherein:
the request from the user indicates a group booking size, the group booking size indicating a number of passengers desired to be seated together;
determining the flight segment comprises determining that the first seat map and the second seat map are compatible with the group booking size, wherein the first seat map and the second seat map are compatible if each of the first seat map and the second seat map indicate a number of seats positioned together on an airplane and if the number of seats is more or equal to the group booking size.

6. The apparatus of claim 1 or of any of claims 3 to 5, or the system of claim 2 or of any of claims 3 to 5, wherein:
the request from the user indicates one or more seat preferences; and
determining the flight segment comprises determining that the first seat map and the second seat map is compatible with the one or more indicated seat preferences.

7. The apparatus or system of claim 6, wherein the one or more seat parameters comprises one or more of: a number of available seats, a number of available aisle seats, a number of available window seats, a number of available first class seats, a number of available business class seats, a number of coach class seats, and a maximum number of seats available together.

8. The apparatus of claim 1 or of any of claims 3 to 7, wherein the hardware processor is further configured to:
receive a second request from the user, the second request comprising a third location and a fourth location;
determine a second flight segment from the third location to the fourth location, the flight segment comprising a third flight leg and a fourth flight leg;
determine, in the cache, one or more missing seat maps for the third flight leg and the fourth flight leg;
obtain, from the one or more airline CRSs, the one or more missing seat maps;
store, in the cache, the one or more missing seat maps; and
communicating the second flight segment and the seat maps for the third flight leg and the fourth flight leg including the one or more missing seat maps; or
the system of claim 2 or of any of claims 3 to 7 wherein the hardware processor is further configured to:
receive a second request comprising a third location and a fourth location, wherein the third location is an origin location and the fourth location is a destination location for a flight;
determine a second flight segment from the third location to the fourth location, the flight segment comprising a third flight leg and a fourth flight leg;
determine, in the cache, one or more missing seat maps for the third flight leg and the fourth flight leg;
obtain, from the one or more CRSs, the one or more missing seat maps; store, in the cache, the one or more missing seat maps; and
communicate the second flight segment and the seat maps for the third flight leg and a fourth flight leg including the one or more missing seat maps.

9. A method, comprising:
storing, in a cache, a first seat map for a first flight leg and a second seat map for a second flight leg;
receiving, using a hardware processor coupled to the cache, a request from a user, the request comprising a first location and a second location;
determining, using a hardware processor coupled to the cache, a flight segment from the first location to the second location, the flight segment comprising the first flight leg and the second flight leg;
retrieving from the cache, using a hardware processor coupled to the cache, the first seat map and the second seat map;
communicating, using a hardware processor coupled to the cache, the flight segment, the first seat map, and the second seat map to the user;
receiving, using a hardware processor, a selection from the user of the flight segment;
in response to the selection, obtaining, using a hardware processor coupled to the cache, from one or more airline computer reservations systems (CRS) a first updated seat map for the first seat map and a second updated seat map for the second seat map;
updating, in the cache, the first seat map with the first updated seat map and the second seat map with the second updated seat map;
presenting, using a hardware processor coupled to the cache, the first updated seat map and the second updated seat map to the user;
receiving, using a hardware processor coupled to the cache, from the user, a first seat selection from the first updated seat map and a second seat selection from the second updated seat map; and
reserving, using a hardware processor coupled to the cache, the first seat selection and the second seat selection in the one or more CRSs.

10. The method of claim 9, further comprising:
receiving, using a hardware processor coupled to the cache, a notification from the CRS that the first seat map has changed; and
in response to the notification, replacing, in the cache, the first seat map with the changed first seat map from the CRS.

11. The method of claim 9 or of claim 10, further comprising:
determining, using a hardware processor coupled to the cache, that a time since the first seat map was last updated exceeds a predetermined period of time; and
in response to the determination, updating, in the cache, the first seat map with a current first seat map from one of the CRSs.

12. The method of claim 9 or of claim 10 or of claim 11, wherein:
the request from the user indicates a group booking size, the group booking size indicating a number of passengers desired to be seated together;
determining the flight segment comprises determining that the first seat map and the second seat map are compatible with the group booking size, wherein the first seat map and the second seat map are compatible if each of the first seat map and the second seat map indicate a number of seats positioned together on an airplane and if the number of seats is more or equal to the group booking size.

13. The method of claim 9 or of any of claims 10 to 12, wherein:
the request from the user indicates one or more seat preferences; and
determining the flight segment comprises determining that the first seat map and the second seat map is compatible with the one or more indicated seat preferences.

14. The method of claim 13, wherein the one or more seat parameters comprises one or more of: a number of available seats, a number of available aisle seats, a number of available window seats, a number of available first class seats, a number of available business class seats, a number of coach class seats, and a maximum number of seats available together.

15. The method of claim 9 or of any of claims 10 to 14, further comprising:
receiving, using a hardware processor coupled to the cache, a second request from the user, the second request comprising a third location and a fourth location;
determining, using a hardware processor coupled to the cache, a second flight segment from the third location to the fourth location, the flight segment comprising a third flight leg and a fourth flight leg;
determining, using a hardware processor coupled to the cache, in the cache, one or more missing seat maps for the third flight leg and the fourth flight leg;
obtaining, using a hardware processor coupled to the cache, from the one or more airline CRSs, the one or more missing seat maps;
storing, in the cache, the one or more missing seat maps; and
communicating, using a hardware processor coupled to the cache, the second flight segment and the seat maps for the third flight leg and a fourth flight leg including the one or more missing seat maps.
